# EUROPÄISCHE PATENTSCHRIFT

(11) **EP 1 027 591 B1**
(45) Veröffentlichungstag und Bekanntmachung des Hinweises auf die Patenterteilung: **10.12.2003**
(21) Anmeldenummer: 98951515.0
(22) Anmeldetag: 12.10.1998
(51) Int. Cl.: G01N 21/25, B01L 3/00, G02B 21/00

(54) **OPTISCHES ARRAY-SYSTEM UND READER FÜR MIKROTITERPLATTEN**
OPTICAL ARRAY SYSTEM AND READER FOR MICRO TITER PLATES
SYSTEME DE MOSAIQUE OPTIQUE ET LECTEUR POUR MICROPLAQUES DE TITRATION

(30) Priorität: 31.10.1997 DE 19748211
(43) Veröffentlichungstag der Anmeldung: 16.08.2000
(60) Teilanmeldung: 03021981.0
(73) Patentinhaber: CARL ZEISS, 89518 Heidenheim (Brenz) (DE); Carl-Zeiss-Stiftung trading as Carl Zeiss, 89518 Heidenheim (Brenz) (DE)
(72) Erfinder: VÖLCKER, Martin, D-89551 Königsbronn (DE); LIEGEL, Jürgen, D-73447 Oberkochen (DE); GLUCH, Martin, D-07743 Jena (DE)
(86) Internationale Anmeldenummer: EP9806468
(87) Internationale Veröffentlichungsnummer: WO99023474

(56) Entgegenhaltungen:
- EP-A- 0 679 864
- WO-A-95/01559
- WO-A-97/34171
- DE-A- 19 624 421
- DE-A- 19 651 667

## Beschreibung

Die Erfindung betrifft einen Reader für Mikrotiterplatten oder Substanzchips.

In der pharmazeutischen Wirkstoffentwicklung wie in der molekularmedizinischen Diagnose werden Fluoreszenz-, Lumineszenz- und Absorptions-Untersuchungen von riesigen Zahlen kleinster Probenmengen benötigt. Hierbei ist ein hoher Probendurchsatz bei der Messung von größter Bedeutung.

Besonders anspruchsvoll sind Kinetikmessungen, deren Zeitkonstanten einem hohen Durchsatz im Wege stehen.

Zur Bereitstellung der Proben stehen Mikrotiterplatten mit gerastert angeordneten Kleinst-Probenbehältern in Standard-Ausführungen mit z.B. 96 oder einem Vielfachen davon, z.B. 384 oder 1536, Probenbehältern (Multi-Well-Microplatten) zur Verfügung. Alternativ sind auch sogenannte Substanz-Chips als Probenträger in Gebrauch.

Ein derartiger Reader wird beispielsweise von der Firma Molecular Devices Corp. USA unter der Bezeichnung SPECTRAmax(R) PLUS angeboten. Eine Lichtquelle und ein Monochromator sind über 8 Lichtleitfasern mit 8 Spiegeloptiken zur Durchlichtbeleuchtung jeweils eines Probenbehälters und mit 8 messenden Photodetektoren verbunden. Es ist also eine achtfache Parallelmessung möglich.

In der WO 95/01559 ist ein arrayförmiger Probenträger mit einer Vielzahl kleiner Probenvolumina beschrieben, der gleichzeitig für optische Messungen eine oder zwei Mikrolinsen für jedes Probenvolumen aufweist. Durch diese Mikrolinsen soll das aus den einzelnen Probenvolumina emittierte Licht auf einen CCD-Sensor projiziert werden. Ob oder wie eine Anpassung der Abmessungen des Probenträgers an die Abmessungen des CCD-Sensors erfolgt, bleibt jedoch offen.

Aus der WO 97/34171 ist ein scannendes System für die Mikrolithographie und/oder konfokale Mikroskopie bekannt, das probenseitig bzw. photomaskenseitig ein Mikrolinsenarray und zwischen dem Mikrolinsenarray und einem Detektorarry bzw. einem Wafer ein teleskopisches System aufweist. Eine spezielle Anpassung des Rastermaßes des Mikrolinsenarrays an das Rastermaß eines Probenarrays ist dort nicht gegeben.

Aufgabe der Erfindung ist es, einen Reader für Mikrotiterplatten oder Substanzchips anzugeben, der eine massiv parallele Messung ermöglicht und so den Probendurchsatz auch bei Kinematikmessungen massiv zu steigert. Dabei soll ein hoher Wirkungsgrad der Lichtwege und ein kompakter, möglichst einfacher Aufbau erreicht werden. Selbstverständlich ist eine hohe Meßempfindlichkeit zu gewährleisten.

Ein optisches System nach Anspruch 1 löst diese Aufgabe.

Es wird zur Detektion ein Detektorarray vorgesehen, das z.B. als CCD-Array zur Verfügung steht. Klassische Optik mit klassischen Linsen über den ganzen Querschnitt wird mit Linsen-Arrays kombiniert. Damit wird sowohl eine maßstabgerechte Abbildung des gesamten erfaßten Gegenstandsbereichs (Mikrotiterplatte) auf das CCD-Array erreicht als auch eine geeignete Abbildung von Bereichen der einzelnen Wells der Mikrotiterplatte auf das CCD-Array (zwei verschiedene Maßstäbe), bei strikter Kanaltrennung zwischen den verschiedenen Wells.

Die Integration einer Auflichtbeleuchtung ergibt mit geringstem Aufwand eine doppelte Nutzung der optischen Elemente, einen besonders guten Wirkungsgrad und besondere Rauschunterdrückung dadurch, daß genau das Probenvolumen ausgeleuchtet wird, das auch vom Nachweisstrahlengang erfaßt wird.

Vorteilhaft werden dabei die in den Unteransprüchen angegebenen Merkmale ergänzt. Das Teleskop ist einlinsig über den Querschnitt. Ein Mikrolinsenarray kann vor dem Detektorarray angeordnet sein.

Mit einem Lochblendenarray kann eine weitere Störunterdrückung erreicht werden.

Näher erläutert wird die Erfindung anhand der Zeichnung.
- Fig . 1: zeigt schematisch eine erfindungsgemäße optische Anordnung in einer ersten Ausführung;

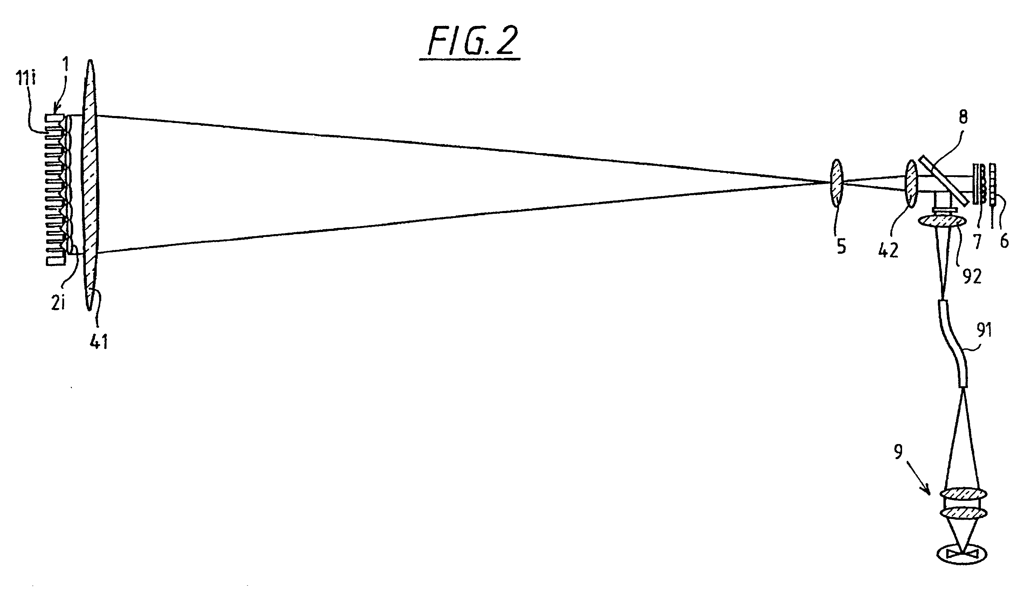

- Fig. 2: zeigt schematisch einen erfindungsgemäßen Reader.

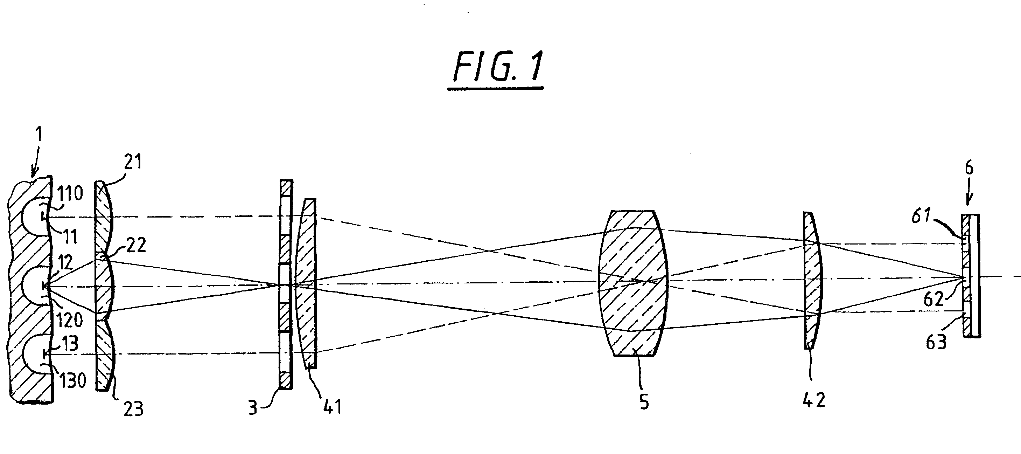

Die Darstellung der Figur 1 zeigt von allen Array-Elementen jeweils nur drei Exemplare, um übersichtlich das Prinzip darstellen zu können. Eine praktische Ausführung sieht in Anpassung an gebräuchliche Mikrotiterplatten Arrays von 8 x 12 = 96 Elementen (Pixeln) vor.

Ein Gegenstandsarray 11, 12, 13 wird von der Mikrotiterplatte 1 mit Vertiefungen (Wells) und darin eingelagerten Substanzproben 110, 120, 130 gebildet. Das gleiche Rastermaß weist das Mini-Linsenarray 21, 22, 23 auf, das aus konventionellen kleinen Linsen zusammengebaut ist und mit einer Brennweite von f = 7,5 und einer numerischen Apertur von ca. 0,6 das Licht von einem zentralen Bereich 11, 12, 13 der Proben 110, 120, 130 effektiv einsammelt. In der Zwischenbildebene im Abstand von 380 mm ist eine Lochblende 3 angeordnet, welche ein Übersprechen zwischen den einzelnen Array-Elementen unterbindet.

Das folgende Teleskop aus den Linsen 41 und 42 verkleinert den Bündeldurchmesser von 130 mm auf 15 mm in Anpassung an die Abmessungen des CCD-Arrays. Die dazwischen angeordnete Feldlinse 5 sorgt für die Abbildung des Zwischenbilds und damit des Gegenstandsarrays 11, 12, 13 auf die Elemente des CCD-Arrays 6.

Die gesamte "Kollektiv"-Optik 41, 5, 42 ist in ihrem Durchmesser nur durch die Größe der Mikrotiterplatte 1 bzw. des Gegenstandsarrays 11, 12, 13 bestimmt. Dagegen müßte eine normale CCD-Kamera mit der gleichen numerischen Apertur von 0,6 weitaus größere Linsen haben. Dies wird dadurch ermöglicht, daß die numerische Apertur des erfindungsgemäßen optischen Systems durch die Elemente 21, 22, 23 des Mini-Linsenrasters bestimmt wird.

Das wichtigste an der Anordnung ist, daß frei von Übersprechen jeder Probe 110, 120, 130 genau eine Bildzone auf dem CCD-Array entspricht.

Für Fluoreszenz- oder Absorptions-Messungen wäre eine Beleuchtungseinrichtung zu ergänzen, z.B. in der Art, wie sie mit Fig. 2 näher erläutert wird.

Für Lumineszenzmessungen ist die Anordnung der Figur 1 bereits unmittelbar geeignet, allerdings wird dafür eine etwa Zehnfache Brennweite des Linsenarrays 21, 22, 23 bevorzugt, womit das erfaßte Probenvolumen anwächst.

Die Anordnung der Fig. 2 ist als Fluoreszenz-Reader ausgelegt. Zunächst hat sie die gleichen Elemente wie die Fig. 1, nämlich Mikrotiterplatte 1 mit Wells 11i, Mini-Linsenarray 2i mit 96 Linsen, große (41) und kleine (42) Teleskoplinse, dazwischen die Feldlinse 5 und das CCD-Array 6. Abweichend kollimiert jedoch das Mini-Linsenarray 2i, es gibt keine Lochrasterplatte, jedoch ein Mikro-Linsenarray 7 unmittelbar vor dem CCD-Array 6 mit 96 Mikrolinsen, welche kollektiv in Mikrostrukturtechnik hergestellt sind und die Abbildung in die Detektorzellen des CCD-Arrays 6 bewirken.

Es wird dabei ein Rastermaß auf dem CCD-Array von etwa vierzig Detektorzellen im Durchmesser erreicht, in dem etwa ein Spot von zwanzig Detektorzellen im Durchmesser von jedem Probenelement ausgeleuchtet wird.

Zwischen der Teleskoplinse 42 und dem Mikro-Linsenarray 7 ist ein Einkoppelspiegel 8 (dichroitischer Spiegel) angeordnet. Eine Beleuchtungseinrichtung 9 gibt über Lichtleitfasern 91 und Kondensor 92 Beleuchtungslicht auf den Spiegel 8, das über das schon beschriebene optische System genau an die Stellen auf der Mikrotiterplatte 1 geleitet wird, die auf den CCD-Detektor 6 abgebildet werden. Das Licht der Beleuchtungseinrichtung 9 wird daher optimal für die Messung ausgenutzt. Störungen durch Beleuchtung der Struktur der Mikrotiterplatte 1 und dergleichen entfallen.

Die Beleuchtungseinrichtung kann aus einer Weißlichtquelle, z.B. einer Xenon-Gasentladungslampe, bestehen, auch kombiniert mit einem Monochromator zur Ausbildung eines Spektrophotometers.

Auch eine Linienquelle, z.B. ein Laser, kommt in Frage.

Mit einer diskreten Scan-Einrichtung für die Relativbewegung von Mikrotiterplatte 1 und Mini-Linsenarray 2i einschließlich der gesamten optischen Anordnung kann z.B. eine 384-Well-Mikrotiterplatte mit vier Stellungen nacheinander komplett ausgelesen werden.

Übliche Filter in Beleuchtungs- und Nachweisstrahlengang zur Trennung von Beleuchtungs- und Fluoreszenzlicht können zur Anpassung an verschiedene Wellenlängen zusammen mit dem dichroitischen Spiegel in einem auswechselbaren Modul angeordnet sein und so einen schnellen Wechsel des Fluoreszenzsystems ermöglichen.

Aus dem gleichen Grund wird zumindest das gegenstandsseitige Linsenarray 2i achromatisiert, indem jede einzelne Linse durch eine Linsengruppe mit achromatischer Korrektur ersetzt wird. Als Spektralbereich wird dann typischerweise etwa 350 bis 800 nm vorgesehen.

Wird der Strahlteiler 8 nicht dichroitisch ausgebildet und wird über der Mikrotiterplatte 1 ein Spiegel angeordnet, so kann einfach eine Anordnung zur Absorptionsmessung analog dem beschriebenen Gerät der Firma Molecular Dynamics abgeleitet werden.

Die Anordnung ist konfokal in dem Sinne, daß ein in der Probe räumlich begrenzter Beleuchtungsfleck mit einem räumlich begrenzten Detektionsbereich überlagert wird. Die Blende im Beleuchtungsstrahlengang kann das Faserende oder eine Leuchtfeldblende darstellen, die Blende im Detektionsstrahlengang kann durch selektives Auslesen der CCD-Pixel im Bereich der einzelnen Beleuchtungsflecken, durch ein Lochblendenarray vor der CCD-Kamera oder durch eine Feldblende im Bereich der Feldlinse erzeugt werden.

Auch eine Durchlichtbeleuchtung kann mit dieser Konfokalität realisiert werden, wenn ein entsprechendes Linsenarray wie das Linsenarray 2i vorgesehen wird.

Bei der Ausführung als Reader für Fluoreszenzmessungen wird vorzugsweise ein Fokusdurchmesser von 50 bis 500 µm, besonders 150 µm, bei einer numerischen Apertur von 0,6 bis 0,7 vorgesehen.

Als Reader für Lumineszenz wird der Fokusdurchmesser besser dem Töpfchendurchmesser (Durchmesser eines Wells) von 3 bis 4 mm bei 384er Mikrotiterplatten angepaßt.

Fluoreszenzkorrelationsspektroskopie (FCS) kann mit dem gleichen optischen Konzept parallelisiert und damit für High-Throughput-Anwendungen tauglich werden. Für ein gutes Signal-Rausch-Verhältnis ist hier jedoch die Reduzierung des Meßvolumens in den Bereich von Femtolitern mit einem Fokusdurchmesser von 0,1 - 10 µm vorteilhaft. Die minimale Korrelationszeit ist jedoch durch die Integrations- und Auslesezeit des CCD-Arrays begrenzt. Parallel auslesbare Detektor-Arrays wie APD-Arrays sind daher in dieser Anwendung zu bevorzugen.

Zur leichten Anpassung an die unterschiedlichen Meßverfahren wird daher ein modular aufgebauter Reader vorgeschlagen, bei dem das probenseitige Linsenarray 2i austauschbar ist.

Es sind damit folgende Vorteile der Erfindung hervorzuheben:
- Hohe Kanalzahl mit größenordnungsmäßig 10² Kanälen ist gut möglich und ergibt wirkungsvolle Parallelisierung.
- Eine hohe Fluoreszenz-Nachweisempfindlichkeit ist durch die große mögliche Apertur der Einzellinsen 21, 22, 23 des Mini-Linsenarrays gegeben.
- Eine geringe Leistung der Lichtquelle 9 ist ausreichend, weil die Beleuchtung strukturiert erfolgt und die hohe Fluoreszenz-Nachweisempfindlichkeit gegeben ist.
- Eine starke Unterdrückung von störender Fluoreszenz von außerhalb des Meßvolumens (typisches Meßvolumen bei Fluoreszenzmessungen für Mikrotiterplatten und 96-Kanal-Optik: wenige Nanoliter) durch die konfokale Detektion erlaubt die Messung von homogenen Proben trotz möglicherweise starker Fluoreszenzkonzentrationen auf dem Boden durch Ausfällungen und trotz starker Eigenfluoreszenz der Böden und Wände der Wells in der Mikrotiterplatte.
- Eine Unabhängigkeit von der Füllhöhe bei Fluoreszenzmessungen wird durch die Konfokalität ebenfalls bewirkt.
- Fluoreszenzfilter und Strahlteiler mit Standardmaßen (Durchmesser im Bereich von 25 mm) können verwendet werden, da die großen Abmessungen der Mikrotiterplatten durch das Teleskop verkleinert werden (Durchmesser am CCD-Array ca. 15 mm).
- Das Übersprechen zwischen benachbarten Proben (Wells) ist durch die lokale Beleuchtung und konfokale Detektion prinzipiell gering und kann durch eine Lochmaske oder Stege zwischen den Linsenelementen der Linsenarrays und simultane Verwendung z.B. nur jedes zweiten Wells (z.B. 96-Kanal-Detektion bei 384er-Mikrotiterplatten) weiter reduziert werden.
- Die Datenerfassung ist auch bei der hohen Kanalzahl durch Verwendung eines CCD-Arrays einfach.
- Flexibilität im Format ist gegeben, da das 96er Raster des Readers auch zu höher integrierten Mikrotiterplatten (z.B. 384, 864, 1536 Wells) und zu sogenannten Zell-Chips und DNA-Chips paßt.
- Kinetische Fluoreszenzmessungen werden durch die Vielkanalausführung besonders unterstützt.
- An zellbasierten Arrays können Fluoreszenzmessungen durch Fokussierung des Linsenarrays 2i auf Zellen, die auf dem Boden des Wells aufgebracht sind, durchgeführt werden. Ortsaufgelöstes Auslesen der individuellen, hier möglichst großen Spots auf der CCD mit einer Auflösung von etwa der Zellgröße oder besser erlaubt eine wesentlich detailliertere, ortsaufgelöste Analyse der biologischen Funktion der zu untersuchenden Substanz. Dieses High Content Screening (HCS) erlaubt z.B. den Vergleich der Fluoreszenzkonzentrationen außerhalb, auf und innerhalb der Zelle und im Zellkern. Auch hier ist die Kinetik wichtig.

## Patentansprüche

1. Reader für Mikrotiterplatten oder Substanzchips, mit einem Linsenarray (21-23), dessen Rastermaß dem Rastermaß einer Mikrotiterplatte oder eines Substanzchip entspricht, eine Beleuchtungseinrichtung und einem Detektorarray (61-63), wobei auf dem Detektorarray eine strikte Kanaltrennung zwischen den aus einzelnen Probenvolumina der Mikrotiterplatte oder des Substanzchips stammenden Messsignalen gewährleistet ist, **dadurch gekennzeichnet, dass** zwischen dem Linsenarray und dem Detektorarray ein Teleskop vorgesehen ist, das den vom Linsenarray definierten Bündeldurchmesser an die Abmessungen des Detektorarrays verkleinernd anpasst, dass eine Feldlinse (5) vorgesehen ist, dass die Mikrotiterplatte oder der Substanzchip über das System aus Linsenarray, Teleskop- und Feldlinse verkleinert auf das Detektorarray abgebildet ist, dass die Beleuchtungseinrichtung genau die Probenvolumina ausleuchtet, die von dem Linsenarray und dem Teleskop auf das Detektorarray abgebildet sind, und daß das Linsenarray achromatisiert ist, indem jede einzelne Linse aus einer Linsengruppe mit achromatischer Wirkung besteht.

2. Reader nach Anspruch 1, **dadurch gekennzeichnet, daß** zwischen Linsenarray (21-23) und Feldlinse (5) und dieser und dem Detektorarray (61-63) je eine Linse (41, 42) des Teleskops angeordnet ist.

3. Reader nach einem der Ansprüche 1-2, **dadurch gekennzeichnet, daß** vor dem Detektorarray (6) ein Mikrolinsenarray (7) angeordnet ist.

4. Reader nach mindestens einem der Ansprüche 1-3, **dadurch gekennzeichnet, daß** ein Lochblendenarray (3) zwischen Linsenarray (21-23) und Feldlinse (5) angeordnet ist.

5. Reader nach mindestens einem der Ansprüche 1-4, **dadurch gekennzeichnet, daß** das Detektorarray (6) ein CCD-Array oder ein Photodioden-Array ist.

6. Reader nach mindestens einem der Ansprüche 1-5, **gekennzeichnet durch** einen modularen Aufbau mit einem austauschbaren Linsenarray (21 - 23).

7. Reader nach einem der Ansprüche 1 - 6, **dadurch gekennzeichnet, daß** das Linsenarray aus konventionellen kleinen Linsen zusammengebaut ist die im Format 8 * 12 zueinander angeordnet sind.

8. Reader nach einem der Ansprüche 1 - 7, **dadurch gekennzeichnet, daß** ein dichroitischer Spiegel (8) für die Einkoppelung der Beleuchtungseinrichtung (9) vorgesehen ist.

## Claims

1. Reader for microtitre plates or substance chips, with a lens array (21 - 23), the repeat constant of which corresponds to the repeat constant of a microtitre plate or of a substance chip, an illumination device and a detector array (61 - 63), strict channel separation being ensured on the detector array between the measurement signals originating from individual sample volumes of the microtitre plate or of the substance chip, **characterized in that** a telescope is provided between the lens array and the detector array, which telescope adapts with size reduction the beam diameter defined by the lens array to the dimensions of the detector array, **in that** a field lens (5) is provided, **in that** the microtitre plate or the substance chip is imaged with size reduction onto the detector array via the system made up of the lens array, the telescope lens and the field lens, **in that** the illumination device illuminates precisely the sample volumes which are imaged onto the detector array by the lens array and the telescope, and **in that** the lens array is achromatized by each individual lens consisting of a lens group with an achromatic effect.

2. Reader according to Claim 1, **characterized in that** a lens (41, 42) of a telescope is respectively arranged between the lens array (21 - 23) and the field lens (5) and between the latter and the detector array (61 - 63).

3. Reader according to one of Claims 1 - 2, **characterized in that** a microlens array (7) is arranged in front of the detector array (6).

4. Reader according to at least one of Claims 1 - 3, **characterized in that** a diaphragm array (3) is arranged between the lens array (21 - 23) and the field lens (5).

5. Reader according to at least one of Claims 1 - 4, **characterized in that** the detector array (6) is a CCD array or a photodiode array.

6. Reader according to at least one of Claims 1 - 5, **characterized by** a modular structure with a replaceable lens array (21 - 23).

7. Reader according to one of Claims 1 - 6, **characterized in that** the lens array is made up of conventional small lenses, which are arranged in the 8 * 12 format with respect to one another.

8. Reader according to one of Claims 1 - 7, **characterized in that** a dichroic mirror (8) is provided for the input coupling of the illumination device (9).

## Revendications

1. Lecteur pour microplaques de titration ou microplaquettes de substance avec une mosaïque de lentille (21-23) dont la dimension de trame correspond à la dimension de trame d'une microplaque de titration ou d'une microplaquette de substance, un dispositif d'éclairage et une mosaïque de détecteur (61-63), pour lequel une séparation de canal stricte entre les signaux de mesure provenant des volumes d'échantillons individuels de la microplaque de titration ou de la microplaquette de substance est garantie sur la mosaïque de détecteur, **caractérisé en ce qu'**un télescope est prévu entre la mosaïque de lentille et la mosaïque de détecteur, lequel réduit le diamètre de faisceau défini par la mosaïque de lentille pour l'adapter aux dimensions de la mosaïque de détecteur, **en ce qu'**une lentille de champ (5) est prévue, **en ce que** la microplaque de titration ou la microplaquette de substance est représentée de manière réduite sur la mosaïque de détecteur via le système de mosaïque de lentille, télescope et lentille de champ, **en ce que** le dispositif d'éclairage éclaire exactement ceux des volumes d'échantillons qui sont représentés par la mosaïque de lentille et le télescope sur la mosaïque de détecteur, et **en ce que** la mosaïque de lentille est achromatisée **en ce que** chaque lentille individuelle se compose d'un groupe de lentilles à effet achromatique.

2. Lecteur selon la revendication 1, **caractérisé en ce qu'**entre la mosaïque de lentille (21-23) et la lentille de champ (5), et celle-ci et la mosaïque de détecteur (61-63), est aménagée respectivement une lentille (41, 42) du télescope.

3. Lecteur selon l'une quelconque des revendications 1-2, **caractérisé en ce qu'**une mosaïque de microlentille (7) est aménagée devant la mosaïque de détecteur (6).

4. Lecteur selon au moins l'une quelconque des revendications 1-3, **caractérisé en ce qu'**une mosaïque de diaphragme à trou est aménagée entre la mosaïque de lentille (21-23) et la lentille de champ (5).

5. Lecteur selon au moins l'une quelconque des revendications 1-4, **caractérisé en ce que** la mosaïque de détecteur (6) est une mosaïque CCD ou une mosaïque de photodiode.

6. Lecteur selon au moins l'une quelconque des revendications 1-5, **caractérisé par** une construction modulaire avec une mosaïque de lentille (21-23) interchangeable.

7. Lecteur selon l'une quelconque des revendications 1-6, **caractérisé en ce que** la mosaïque de lentille est construite à partir d'un ensemble de petites lentilles conventionnelles aménagées au format 8 * 12 les une par rapport aux autres.

8. Lecteur selon l'une quelconque des revendications 1-7, **caractérisé en ce qu'**un miroir dichroïque (8) est prévu pour la liaison avec le dispositif d'éclairage (9).
